Europäisches Patentamt

European Patent Office

Office européen des brevets

(11) Publication number: **0 373 299**
**A2**

## EUROPEAN PATENT APPLICATION

(21) Application number: **89115611.9**

(51) Int. Cl.5: **G06F 15/16**

(22) Date of filing: **24.08.89**

(30) Priority: **15.12.88 US 284948**

(43) Date of publication of application:
**20.06.90 Bulletin 90/25**

(84) Designated Contracting States:
**DE FR GB**

(71) Applicant: **PIXAR**
**3240 Kerner Boulevard**
**San Rafael, CA 94901(US)**

(72) Inventor: **Leather, Mark**
**477 Frederick Street**
**San Francisco California 94117(US)**

(74) Representative: **Zenz, Joachim Klaus,**
**Dipl.-Ing. et al**
**Patentanwälte Zenz, Helber & Hosbach Am**
**Ruhrstein 1**
**D-4300 Essen 1(DE)**

(54) **Method and apparatus for memory routing scheme.**

(57) A memory routing scheme for a computer system having M processors (P0 ... P5) and N memories is described. M processors are coupled through a randomizer (23) to a routing network (10), such as a crossbar. The crossbar is coupled to N memories (MEM 0 ... 5). When a memory address is specified by a processor, it is acted on by the randomizer and a routed address is given to the memory. The memory having the routed address is coupled to the processor for the access. By utilizing a random routing scheme, the memories are not optimized for any one particular access mode, but present the same look to the processors regardless of the access mode. The average number of collisions in this scheme is a function of the number of memories, number of processors and number of access ports. In one embodiment, a hashing table is utilized for the assignment of the routing address to the memories. Alternatively, a randomizing function is utilized to generate a routing address.

FIGURE 2

# METHOD AND APPARATUS FOR MEMORY ROUTING SCHEME

## BACKGROUND OF THE INVENTION

### 1. Field of the Invention

This invention relates to the field of memory systems and routing schemes for reading and writing data.

### 2. Background Art

A number of computer applications require the use of a plurality of processors to achieve high speed processing power. This is particularly true in data intensive applications such as computer graphics. One example of a prior art multiple processor system is the single instruction, multiple data stream (SIMD) computer described in co-pending United States Patent Application number 175,621 and assigned to the assignee of the present invention.

One specific application of multiple processor computer systems is found in the rendering of three dimensional image volumes. Volume image data representing points in three dimensional space is stored in a memory array. The data generally represents rows (x axis), columns (y axis) and shafts (z axis). The manner in which data is acquired from a memory system is referred to as an "access mode". For example, in certain volume imaging applications, data is accessed as linearly adjacent in the x, y or z directions or in planes xy, xz or yz. When the access mode is known, the memory routing scheme can be optimized to reduce or eliminate the number of collisions between the plurality of processors and the memory units.

Mass storage of a computer system is typically defined as an array of smaller memory units. These smaller memory units may be actual physical memories themselves, such as a plurality of random access memories (RAM), erasable programmable read only memories (EPROM's), electronically erasable read only memories (EEPROM'S) etc., or an electronic sub-division of a single large storage unit. The mass storage of a computer system may therefore be thought of as a series of linearly adjacent memories or as a series of memory planes.

One prior art memory scheme is referred to as a "non-common memory" parallel processing architecture. In this scheme, each processor has its own associated memory which cannot be accessed by another processor. This prevents collisions between processors. However, this scheme is useless in image processing applications in which two passes through a data set are required, (one in the vertical orientation and one in the horizontal orientation).

Another prior art memory routing scheme uses a single bus coupling the processors to one or more memories. Such a scheme guarantees collisions and prevents the use of more than a single processor at one time. It is possible to achieve sufficient bandwidth by providing a large data block size. However, high block sizes give rise to high latency times and low performance when operating on small blocks of data.

Another prior art scheme is the use of a dual port RAM so that two processors can access a single RAM, provided both processors do not attempt to access the same address in the memory. However, the prior art dual port scheme is limited because in present technology, only dual port RAMs are available. Therefore, only two processors are supported when it may be desired to utilize a large number of processors in the computer system.

Consider another prior art multiple processor computer system connected via a switching network having M processors and N memories. If $N \geq M$, it is possible for each processor to access a different memory during a memory operation. When two or more processors are attempting to access the same memory, a "collision" takes place and a method of determining which processor will access the memory in which order must be provided. When the predominant or preferred access mode is known, the memory assignment scheme or logical to physical address mapping scheme can be optimized to reduce or eliminate collisions between processors. However, if the access mode is not known, or if the access mode changes in an unpredictable manner, it is difficult to optimize the memory assignment scheme or logical to physical address mapping scheme to achieve maximum performance.

Another prior art memory routing scheme is described in co-pending U. S. Patent Application entitled METHOD AND APPARATUS FOR STORAGE AND ACCESS OF THREE DIMENSIONAL DATA ARRAYS filed on October 13, 1988, Serial Number 257,936 and assigned to the assignee of the present invention.

This scheme involves a method in which blocks of data, each representing an n x n x n cube of elements, are stored in n memories, and n elements may be simultaneously accessed adjacent in the X, Y or Z directions. Memory elements are written and accessed by using a rotation scheme optimized for row, column and shaft access modes.

One problem with prior art memory routing schemes is their dependence on access mode. If the access mode is not known, or if it deviates from the predicted access mode, an unacceptable number of collisions may take place.

Therefore, it is an object of the present invention to provide a memory routing scheme which is access mode independent and in which collisions are minimized to some acceptable low level.

It is another object of the present invention to provide a memory routing scheme in which random access modes may be utilized without degrading system performance.

Other objects and attendant advantages of the present invention will become apparent upon reading the following detailed description of the invention along with the accompanying drawings in which like reference numerals refer to like parts throughout.


## SUMMARY OF THE PRESENT INVENTION


A memory routing scheme for a computer system having M processors and N memories is described. In the present invention, the memory routing scheme is access mode independent so that the average number of collisions is minimized regardless of the access mode. In the preferred embodiment, M processors are coupled through an address randomizer to a routing network, such as a crossbar. The crossbar is coupled to N memories. When a memory address is specified by a processor, it is acted on by the randomizer, routed by the cross bar and a routed address is given to the memory. The memory having the routed address is coupled to the processor for the access. By utilizing a random routing scheme, the memories are not optimized for any one particular access mode but present the same look to the processors regardless of the access mode.

In the preferred embodiment of the present invention, each processor has one port into the routing network. In cases where higher bandwidth is required, additional ports may be used. The average number of collisions in the scheme of the present invention is a function of the number of memories, and number of access ports. In one embodiment, a hashing table is utilized for the assignment of the routing address to the cross bar.

In the present invention each processor/randomizer combination produces memory requests at random and independent addresses. In the preferred embodiment, a hash table is implemented by repeated application of an individual look up table. In the present invention the individual look up table has a one to one mapping of input to output addresses so that the complete hash table has a one to one mapping of logical addresses and physical memory locations. In one embodiment, for distribution of bit positions, a fully programmable hash table is utilized comprising repeated application of a ROM and permutation. When collisions do occur, the present invention may assign a rotating priority scale which increments after each memory cycle.


## BRIEF DESCRIPTION OF THE DRAWINGS


Figure 1A is a block diagram illustrating a prior art n x n array of data elements.
Figure 1B is a block diagram illustrating another prior art data array.
Figure 2 is a block diagram illustrating the preferred embodiment of the present invention.
Figure 3 is a block diagram illustrating a ROM and permutation network.
Figure 4 is a block diagram illustrating a hardware implementation of a 16 bit ROM programmable hashing table

## DETAILED DESCRIPTION OF THE PRESENT INVENTION


A memory routing scheme to minimize collisions among processors in a multiple processor system is described. In the following description, numerous specific details, such as access orientation, etc., are set forth to provide a more thorough description of the present invention. It will be apparent, however, to one skilled in the art, that the present invention may be practiced without these specific details. In other instances, well known features have not been described in detail in order not to obscure the present invention.

PRIOR ART

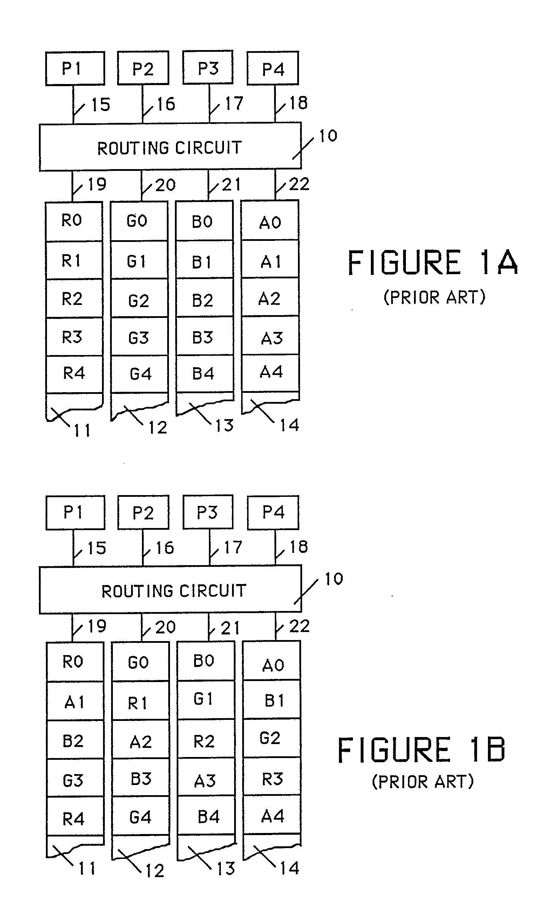

Referring to Figure 1A, a prior art memory scheme is illustrated. In the example shown, four processors P1, P2, P3 and P4 are coupled to four memories 11-14 through routing circuit 10. The routing circuit 10 may be a cross bar where any input line 15-18 of the processors P1-P4 may be coupled to any of the crossbar output lines 19-22. Thus, each of the processors can access any of the four memories during any one memory access.

In the present example, the processors may be part of a graphic imaging system in which three dimensional data is represented by volume elements (voxels) identified by their characteristic information expressed as color components and opacity. The color components are given by red (R), green (G) and blue (B) values while the opacity is given by an alpha (A) value. Such a system is described in copending U. S. Patent Application number 851,776 entitled METHOD AND APPARATUS FOR IMAGING VOLUME DATA and assigned to the assignee of the present invention.

The memories 11-14 are used to store the components of the voxels. For example, memory 11 contains the red values R0-R(n). Memories 12-14 contain the green, G0-G(n); blue, B0-B(n); and opacity, A0-A(n) respectively. This scheme is designed to optimize a memory access in which the four components of a single voxel are obtained. However, if it is necessary or desirable to access one component of four different voxels, such as, for example, four red values for voxels 0-3, the scheme illustrated in Figure 1A requires four memory cycles. This is because only one of processors P1-P4 can access memory 11 at a time. When all four attempt to access memory 11, a collision results and access must be limited to one processor at a time.

One prior art attempt to solve the collision problem outlined above is the use of a rotation scheme when entering and retrieving data from the memories 11-14. This prior art scheme is illustrated in Figure 1B. As successive component values for each voxel are provided to the memories 11-14, the components are rotated by the routing circuit so that no single memory contains all components of a single type. That is, no single memory contains all red components for, example. The components R0, G0, B0 and A0 of voxel 0 are found in memories 11-14 respectively. For voxel 1, components R1, G1 and B1 are found in memories 12-14 respectively and component A1 is found in memory 11. Thus, in the scheme of Figure 1B, each successive voxel is "shifted" by one so that the memory containing the red component of one voxel is different from the memory containing the red component of the previous voxel and next successive voxel.

By using the prior art scheme of Figure 1B, the red components, for example, of four successive voxels may be accessed without collisions by the four processors P1-P4. Similarly, all four components of any single voxel may be simultaneously accessed without collisions by the processors P1-P4.

The prior art scheme of Figure 1B provides one solution to the access limitations of the scheme of Figure 1A. However, the scheme does not work well for three dimensional data bases such as may be used in a three dimensional graphics or imaging application. For example, although the scheme of Figure 1B permits the simultaneous access of rows and columns, it does not allow the simultaneous access of "shafts" in a three dimensional data set. Furthermore, the prior art schemes of Figures 1A and 1B are designed to be optimal for a limited number of access modes.

When these prior art schemes are used in other than limited access mode contexts, such as randomized access modes, the number of collisions increases dramatically.

For example, if a user desired to access the red components of voxels 0, 4, 8, and 12, the scheme of Figure 1B results in four collisions because each of those voxels has its red component stored in memory 11. Although it may be possible to provide a memory routing scheme which is optimized for that particular access mode, such a scheme would not be optimized for other access modes. In many applications, the access mode changes frequently and cannot be predicted beforehand.

Collision analysis for prior art schemes is illustrated in the following example, in which an equal number N of memories and processors are connected by an NxN crossbar so that each processor can be coupled to each memory and vice versa. The maximum performance of such a system occurs when each processor accesses a different one of the N memories. For example, when processors 0-N access memories 0-N respectively. In this situation, there are no collisions between processors and 100% throughput is achieved.

However, the throughput of this prior art system drops to a minimum level when each processor attempts to access the same memory. For example, when processors 0-N all attempt to access memory 0, the crossbar allows only a single processor to access a single memory at a time. Thus, the throughput drops to 1/N of the maximum.

In the prior art, a memory routing scheme is optimized for a particular access mode. For example, in image processing, the memory addresses generally follow a linear sequence, such as a, a + b, a + 2b, a + 3b etc. If sequential addresses were placed in sequential memories, and all processors were accessing sequential addresses, the throughput would become 100% within N memory cycles. This may be seen in Table 1 below where 8 processors accessing linear incremental addresses are connected to 8 memories using the addressing scheme: memory = (address modulo 8).

TABLE 1

| P0 | P1 | P2 | P3 | P4 | P5 | P6 | P7 | M0 | M1 | M2 | M3 | M4 | M5 | M6 | M7 |
|----|----|----|----|----|----|----|----|----|----|----|----|----|----|----|----|
| 0  | 0  | 0  | 0  | 0  | 0  | 0  | 0  | 0  | -  | -  | -  | -  | -  | -  | -  |
| 1  | 0  | 0  | 0  | 0  | 0  | 0  | 0  | 0  | 1  | -  | -  | -  | -  | -  | -  |
| 2  | 1  | 0  | 0  | 0  | 0  | 0  | 0  | 0  | 1  | 2  | -  | -  | -  | -  | -  |
| 3  | 2  | 1  | 0  | 0  | 0  | 0  | 0  | 0  | 1  | 2  | 3  | -  | -  | -  | -  |
| 4  | 3  | 2  | 1  | 0  | 0  | 0  | 0  | 0  | 1  | 2  | 3  | 4  | -  | -  | -  |
| 5  | 4  | 3  | 2  | 1  | 0  | 0  | 0  | 0  | 1  | 2  | 3  | 4  | 5  | -  | -  |
| 6  | 5  | 4  | 3  | 2  | 1  | 0  | 0  | 0  | 1  | 2  | 3  | 4  | 5  | 6  |    |
| 7  | 6  | 5  | 4  | 3  | 2  | 1  | 0  | 0  | 1  | 2  | 3  | 4  | 5  | 6  | 7  |
| 8  | 7  | 6  | 5  | 4  | 3  | 2  | 1  | 8  | 1  | 2  | 3  | 4  | 5  | 6  | 7  |
| 9  | 8  | 7  | 6  | 5  | 4  | 3  | 2  | 8  | 9  | 2  | 3  | 4  | 5  | 6  | 7  |
| 10 | 9  | 8  | 7  | 6  | 5  | 4  | 3  | 8  | 9  | 10 | 3  | 4  | 5  | 6  | 7  |

The prior art scheme described with respect to Table 1 requires knowledge of the memory address increment rate b. This value may change depending on the code being run and can take on different values, particularly in two pass algorithms. The tesselation scheme of Figure 1B can be made to work for one or two different values of b, but is restricted for random values and random access modes.

PRESENT INVENTION

The present invention utilizes a scheme in which the processors produce memory requests at random and independent addresses. In other words, the addressing scheme does not follow a linear sequence as in the above described example. The preferred embodiment of the present invention results in a routing scheme which has a constant throughput regardless of the access mode. The sustained throughput rate is a percentage of 63% of the theoretical maximum for N = M.

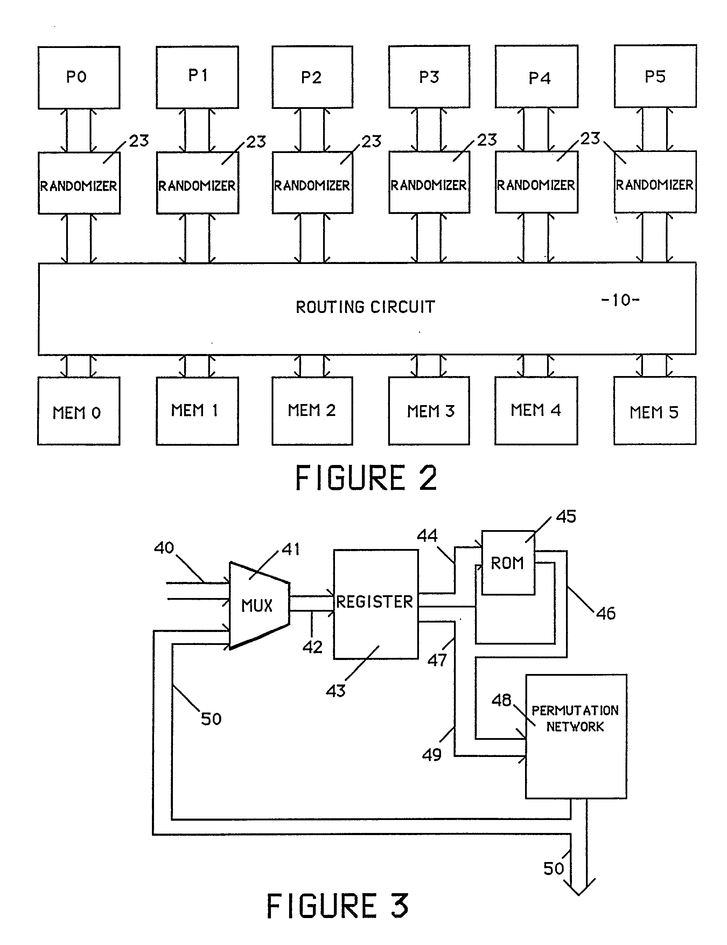

The preferred embodiment of the present invention is illustrated in Figure 2. A plurality of processors P0-P5 are coupled to a routing circuit 10 through a plurality of randomizers 23. The outputs of the routing circuit 10 are coupled to memories MEM 0 - MEM 5. The randomizers 23 may be implemented with a look up table. The randomizers 23 are not truly random, but require a one to one correspondence between the input and output. If there are four inputs to a randomizer for example, then there must be four outputs. By randomizing the storage of the input data, the average number of collisions between processors for a random access mode is minimized.

In operation, the memory address is passed through the randomizer and a random memory address is determined based on the results of a look up table. The data is then stored in the random memory address location. When retrieving data, the opposite operation takes place so that the correct data may be accessed.

The following Table 2 illustrates the operation of the present invention for 8 processors and 8 memories. The address generation is randomized. The collisions are indicated in bold.

TABLE 2

| P0 | P1 | P2 | P3 | P4 | P5 | P6 | P7 | M0 | M1 | M2 | M3 | M4 | M5 | M6 | M7 |
|----|----|----|----|----|----|----|----|----|----|----|----|----|----|----|----|
| 48 | 37 | 63 | 30 | 43 | 6 | 39 | 30 | 48 | - | - | 43 | - | 37 | 30 | 83 |
| 49 | 35 | 24 | 40 | 6 | 6 | 39 | 30 | 24 | 49 | - | 35 | - | - | 6 | 39 |
| 35 | 48 | 37 | 40 | 6 | 49 | 16 | 20 | 40 | 49 | - | - | 36 | 37 | 6 | - |
| 22 | 48 | 32 | 17 | 29 | 18 | 16 | 20 | 48 | 17 | 18 | - | 20 | 29 | 22 | - |
| 62 | 53 | 32 | 32 | 2 | 29 | 16 | 61 | 32 | - | 2 | - | - | 53 | 62 | - |
| 3 | 6 | 40 | 32 | 6 | 29 | 6 | 61 | 32 | - | - | 3 | - | 29 | 6 | - |
| 59 | 32 | 40 | 33 | 56 | 1 | 16 | 61 | 40 | 33 | - | 59 | - | 61 | - | - |
| 26 | 32 | 62 | 45 | 56 | 1 | 16 | 52 | 32 | 1 | 26 | - | 52 | 46 | 62 | - |

In the example shown, the number of memory cycles is 64. There are 39 successful memory accesses (no collisions) and 25 collisions. This results in a throughput rate of approximately 61%. For a large number of cycles, the present invention results in an average throughput rate of 63% of maximum. This compares to a variable throughput rate of anywhere between 0 and 100% for prior art routing schemes.

Let m be the number of memory channels (banks) and let r be the number of simultaneous memory requests from processors, video, I/O, etc. It is desired to calculate requests that will be blocked because of bank collision, and also the standard deviation from this expected value. The assumption is that each request is made to a random bank of memory.

Let gr be the number of memory requests that are granted. If there are no requests, none can be granted; so go = 0. Each additional request will fail if it is for one of the gr-1 banks for the requests which have already been granted and will succeed if it is for one of the other m-gr-1 banks. The chance that this request will be granted is thus (m-gr)/m. So the expected value of gr is given by:

$$g_r = g_{r-1} + 1^* \left( \frac{m - g_{r-1}}{m} \right) + 0^* \left( \frac{g_{r-1}}{m} \right)$$
$$= g_{r-1} + \left( \frac{m - g_{r-1}}{m} \right)$$
$$= 1 + g_{r-1}^* \left( 1 - \frac{1}{m} \right)$$

From this, we can build up a table of effective throughput rates:

| r | m = 1 | m = 2 | m = 3 | m = 4 | m = 5 | m = 6 | m = 7 | m = 8 | ...m = 256 |
|----|-------|-------|-------|-------|-------|-------|-------|-------|-----------|
| 1 | 1.00 | 1.00 | 1.00 | 1.00 | 1.00 | 1.00 | 1.00 | 1.00 | |
| 2 | .50 | .75 | .83 | .88 | .90 | .92 | .93 | .94 | |
| 3 | .33 | .58 | .70 | .77 | .81 | .84 | .86 | .88 | |
| 4 | .25 | .47 | .60 | .68 | .74 | .78 | .81 | .83 | |
| 5 | .20 | .39 | .52 | .61 | .67 | .72 | .75 | .78 | |
| 6 | .17 | .33 | .46 | .55 | .61 | .67 | .70 | .73 | |
| 7 | .14 | .28 | .40 | .50 | .56 | .62 | .66 | .69 | |
| 8 | .13 | .25 | .36 | .45 | .52 | .58 | .62 | .66 | |
| ...<br>256 | | | | | | | | | ...0.63 |

As can be seen from the above table, for large numbers of memories, the throughput rate can be maintained at an acceptable level (63%) even when the number of memory requests r is equal to the number of memories m. For example, when are there 256 memories and 256 memory requests during each memory cycle, the throughput is maintained at 63%. This is achieved due to the random nature of the memory access.

In addition to the randomization of the memory access addresses, throughput at the processor level is affected by the method in which the crossbar assigns priority in the case of collisions. For example, if a convention is used in which a lower numbered processor is given priority, the lower numbered processors will have a higher throughput than the higher numbered processors. In the preferred embodiment of the present invention, a rotating priority scale is utilized. The priority scale is incremented after each memory cycle.

In an alternate embodiment of the present invention, a priority is assigned to each processor based on the length of time each processor has been waiting. In the case of two or more processors having equal wait times, a rotating priority scale is utilized.

## IMPLEMENTATION OF RANDOMIZATION

The randomization of the memory addresses in the preferred embodiment of the present invention is accomplished through the use of a look up table. The table must have a one to one correspondence between the logical addresses and the physical memory addresses. In addition, the table must provide a somewhat random assignment function. For a small hash table, a ROM could be used. However, for many applications, the use of a ROM hash table may be impractical.

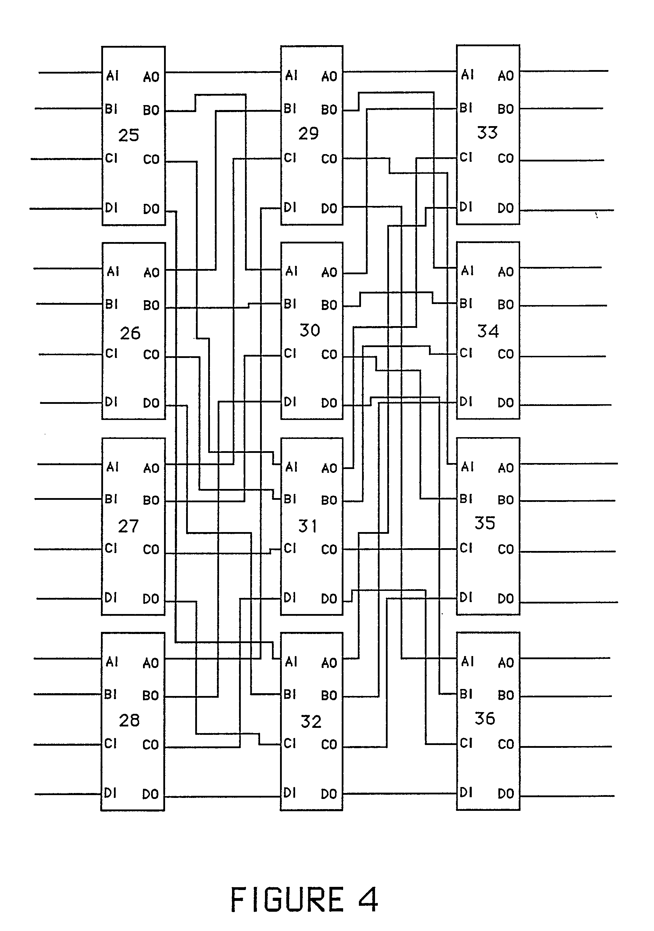

In one embodiment of the present invention, a large hash table is implemented by repeated application of a smaller look up table. The smaller look up table must also have a one to one correspondence so that the complete hash table also has a one to one correspondence. Referring to Figure 4, a hardware solution of such a table is illustrated.

This embodiment of the present invention utilizes a plurality of 16x4 look up tables 20-36. There is a one to one mapping of the smaller look up tables to each other so that the total hash table implemented by the smaller look up tables has a one to one correspondence as well. As can be seen, each small look up table 25-36 has four inputs and four outputs. The entire hash table has 16 inputs and 16 outputs.

In the present invention the input to the hash table is comprised of inputs AI-DI of look up tables 25-28 respectively. The outputs 25 AO-DO are coupled to the A inputs of look up tables 29-32 respectively. That is, output 25 AO is coupled input 29 AI, output 25 BO is coupled to input 30 A1, output 25 CO is coupled to input 31 AI and output DO is coupled to input 32 AI.

The second input look up table 26 has its outputs AO-DO coupled to the BI inputs of tables 29-32 respectively. Look up table 27 has its outputs AO-DO coupled to to the CI inputs of tables 29-32 and input table 28 has its outputs AO-DO coupled to the D inputs of tables 29-32 respectively.

The inputs AI-DI of look up table 33 are coupled to the A outputs of look up tables 29-32 respectively. That is, input 33 AI is coupled to output AO of look up table 29, input 33 BI is coupled to output AO look up table 30, input 33 CI is coupled to output AO of look up table 31 and input 33 DI is coupled to output AO of look up table 32.

The inputs AI-DI of look up table 34 are coupled to help the B outputs of look up tables 29-32 respectively. The inputs AI-DI of look up table 35 are coupled to the C outputs of look up tables 29-32 respectively and the inputs AI-DI of look up table 36 are coupled to the D outputs of look up tables 29-32 respectively.

The distribution of bit positions where the look up table is applied should avoid patterns in the randomizing function, which could lower throughput in the scheme of the present invention.

Figure 3 shows a circuit for a 32 bit randomizer which executes over a period of 16 clock ticks. The randomizer works by repeatedly applying a 6 bit ROM implemented randomizing function, followed by a 32 bit permutation (jumbling of bit positions). A one to one mapping property is preserved.

A 32 bit number stored in register 43 is separated into two outputs 44 and 47. Output 44 represents some fixed number of bits of the output of register 43, for example, 6 bits. This 6 bit output 44 is coupled to a ROM lookup table 45. The number of outputs of ROM 45 is equal to the number of inputs. In other words, if ROM 45 is a 6 bit input ROM, it has a 6 bit output 46 as well. The remaining bits 47 of the output of register 43 are passed straight through and combined with the output 46 of ROM 45 to form output 49. Output 49 represents a function f(x). This function is a randomized version of the output of register 43 due to the action of ROM 45 on a certain number of bits of the output. This function f(x) 49 is then coupled to permutation network 48 where a bit permutation is applied to the function f(x). This bit permutation is function g(x). If the input to permutation network 48 is 32 bits, the output is 32 bits, so there is a one to one mapping of input to output values. The output 50 of permutation network 48 is a value $x^{'}$ representing a combination of the functions f and g, acting on input value x. In the preferred embodiment of the present invention, this application of functions f and g is performed 16 times so that:

$x' = $ gfgfgfgfgfgfgfgfgfgfgfgfgfgfgfgf(x)

The output 50 of the permutation network 48 is coupled in a feedback fashion to multiplexor 41. Also input to multiplexor 41 is the input value x. The output 42 of multiplexor 41 is inputted to register 43.

Since both g and f have one to one mappings, the complete transfer function of the circuit must also have a one to one mapping.

The degree of randomness of the function is dependent both on the 6 bit mapping function f(x), and on the permutation function g(x). Good results have been shown simply by using a computer generated set of non-repeating random numbers, both as values for the 6 bit lookup table, and for bit mapping values for the permutation network.

The circuit shown in Figure 3 may be modified in the general case where the address range is of the form 2n. In this case, the data path is n bits wide, with 6 bits going to the ROM and n-6 bits being passed straight through to the n bit permutation network. It is recommended that the number of clock cycles needed to execute the transfer function be proportional to the number of bits.

An additional modification of the circuit shown in figure 3 provides a transformation function for address ranges of the form 3 x 2n, 5 x 2n, and 7 x 2n. In this case the ROM contains either a 40,48 or 52 size random number table. The permutation network has the added constraint that the upper 3 bits are not allowed to have any permutation applied to them.

In the preferred embodiment of the present invention, the contents of the ROM look up table 45 is:

| | | | |
|---|---|---|---|
| 00: 30 | 10: 17 | 20: 2A | 30: 15 |
| 01: 25 | 11: 10 | 21: 01 | 31: 1C |
| 02: 3F | 12: 14 | 22: 22 | 32: 0D |
| 03: 1E | 13: 16 | 23: 21 | 33: 04 |
| 04: 2B | 14: 20 | 24: 2E | 34: 2C |
| 05: 06 | 15: 11 | 25: 3A | 35: 0F |
| 06: 27 | 16: 1D | 26: 2D | 36: 36 |
| 07: 31 | 17: 12 | 27: 1B | 37: 39 |
| 08: 23 | 18: 3E | 28: 34 | 38: 0E |
| 09: 18 | 19: 35 | 29: 00 | 39: 3C |
| 0A: 28 | 1A: 3B | 2A: 13 | 3A: 0B |
| 0B: 29 | 1B: 02 | 2B: 0A | 3B: 0C |
| 0C: 3D | 1C: 08 | 2C: 1F | 3C: 33 |
| 0D: 09 | 1D: 03 | 2D: 07 | 3D: 05 |
| 0E: 24 | 1E: 1A | 2E: 37 | 3E: 26 |
| 0F: 2F | 1F: 38 | 2F: 32 | 3F: 19 |

The permutation algorithm for the permutation network 48 is as follows in the preferred embodiment of the present invention:

| | | | |
|---|---|---|---|
| bit 0→ bit 18 | bit 8→ bit 9 | bit 16→ bit 4 | bit 24→ bit 21 |
| bit 1→ bit 17 | bit 9→ bit 1 | bit 17→ bit 0 | bit 25→ bit 22 |
| bit 2→ bit 6 | bit 10→ bit 23 | bit 18→ bit 30 | bit 26→ bit 5 |
| bit 3→ bit 14 | bit 11→ bit 3 | bit 19→ bit 24 | bit 27→ bit 26 |
| bit 4→ bit 7 | bit 12→ bit 13 | bit 20→ bit 25 | bit 28→ bit 2 |
| bit 5→ bit 20 | bit 13→ bit 16 | bit 21→ bit 10 | bit 29→ bit 11 |
| bit 6→ bit 19 | bit 14→ bit 12 | bit 22→ bit 15 | bit 30→ bit 28 |
| bit 7→ bit 8· | bit 15→ bit 29 | bit 23→ bit 31 | bit 31→ bit 27 |

The effect of applying functions f and gf at selected stages is illustrated as follows:

| x | f(x) | gf(x) | 4[gf(x)] | 32[gf(x)] |
|---|---|---|---|---|
| 00000000 | 00000030 | 00100080 | 02508382 | 52D2F0DC |
| 00000001 | 00000025 | 00140040 | 02708384 | 5B97028E |
| 00000002 | 0000003F | 001640C0 | 42798286 | 75F6CA60 |
| 00000003 | 0000001E | 000240C0 | 42790282 | 02C92C0C |
| 00000004 | 0000002B | 00164000 | 42598284 | 48258065 |
| 00000005 | 00000006 | 00020040 | 42780280 | 8AA3547C |
| 00000006 | 00000027 | 00160040 | 42788284 | CCEDD4E4 |
| 00000007 | 00000031 | 00140080 | 02508386 | 0CF9A271 |
| 00000008 | 00000023 | 00160000 | 42588284 | 85066878 |
| 00000009 | 00000018 | 00004080 | 02510382 | A660835B |
| 0000000A | 00000028 | 00104000 | 02518380 | BF72C1DE |
| 0000000B | 00000029 | 00144000 | 02518384 | DDC854D6 |
| 0000000C | 0000003D | 001440C0 | 02718386 | 1DBC2DD1 |
| 0000000D | 00000009 | 00044000 | 02510384 | 4606B9C0 |
| 0000000E | 00000024 | 00100040 | 02708380 | A7A05D34 |
| 0000000F | 0000002F | 00164040 | 42798284 | 6F385D19 |

Thus, an improved method and apparatus for a memory routing scheme in a parallel processor architecture is described.

## Claims

1. A method for addressing a plurality of memory locations in a multiple processing environment comprising the steps of:
generating a memory address at each of a plurality of processors;
providing said memory address to a randomizing means,
converting said memory address to a random address;
providing said random address to a routing means
coupling said each processor to a memory corresponding to said random address through said routing means.

2. The method of claim 1 wherein said routing means comprises a crossbar.

3. The method of claim 1 wherein said randomizing means comprises a hash table.

4. The method of claim 3 wherein said hash table comprises a plurality of look up tables, each of said look up tables having an equal number of inputs and outputs, said hash table having an equal number of inputs and outputs.

5. A circuit comprising:
a plurality of processors (P0 ... P5)
a plurality of randomizing means (23), each randomizing means coupled to one of said plurality of said processors;
a plurality of memories (MEM 0 ... MEM 5) coupled to said plurality of randomizing means through a routing circuit (10) such that each of said plurality of memories may be coupled to any of said plurality of randomizing means;
each of said processors providing a memory address to each of said randomizing means, said randomizing means (23) converting said memory address to a random address;
said randomizing means (23) providing said random address to said routing means (10) such that each of said processors (P0 ... P5) is coupled to one of said plurality of memories (MEM 0 ... 5) corresponding to said random address through said routing means.

6. The circuit of claim 5 wherein said routing means (10) comprises a crossbar circuit.

7. The circuit of claim 5 or 6 wherein said randomizing means (10) comprises a hash table (Fig. 4).

8. The circuit of claim 7 wherein said hash table (Fig. 4) comprises a plurality of look up tables, a first plurality of look up tables (25 ... 28) is coupled to said processing means (P0 ... P5), said first plurality of look up tables having a first plurality of outputs (A0 ... D0), said first plurality of outputs coupled to a second plurality of look up tables (29 ... 32), said second plurality of look up tables having a second plurality of outputs (A0 ... D0), said second plurality of outputs coupled to a third plurality of look up tables (33 ... 36), said third plurality of look up tables having a third plurality of outputs coupled to said routing means (10).

FIGURE 1A

(PRIOR ART)

FIGURE 1B

(PRIOR ART)

FIGURE 2

FIGURE 3

FIGURE 4